Europäisches Patentamt

European Patent Office

Office européen des brevets

(11) Veröffentlichungsnummer: **0 492 280 A1**

## EUROPÄISCHE PATENTANMELDUNG

(21) Anmeldenummer: **91121236.3**

(22) Anmeldetag: **11.12.91**

(51) Int. Cl.5: **C03C 8/16**, C04B 41/86

(30) Priorität: **24.12.90 IT 2253590**

(43) Veröffentlichungstag der Anmeldung:
**01.07.92 Patentblatt 92/27**

(84) Benannte Vertragsstaaten:
**DE ES FR GB IT**

(71) Anmelder: **Bayer S.p.A.**
**Viale Certosa 126**
**I-20156 Milano(IT)**

(72) Erfinder: **Salge, Henning, Dr.**
**Fürvelser Strasse 37**
**W-5000 Köln 80(DE)**
Erfinder: **Ferrari, Romano, Dr.**
**Via Zandonai 11**
**I-41049 Sassulo (MO)(IT)**
Erfinder: **Schegel, Christian**
**Via Virgiolio 1**
**I-21040 Venegono Superiore/Va(IT)**

(74) Vertreter: **Steiling, Lothar, Dr. et al**
**c/o Bayer AG Konzernverwaltung RP Patente**
**Konzern**
**W-5090 Leverkusen 1 Bayerwerk(DE)**

(54) **Glasurmikrogranalien, Verfahren zur Herstellung fliess- und benetzungsfähiger Glasurmikrogranalien sowie deren Verwendung und trockenglasierte keramische Werkstoffe.**

(57) Glasurmikrogranalien sind beschrieben sowie ein Verfahren zur Herstellung fließ- und benetzungsfähiger Glasurmikrogranalien für trockenglasierte keramische Werkstoffe, deren Verwendung sowie ein Verfahren zur Herstellung keramischer Erzeugnisse mit glatten, strukturfreien Glasuroberflächen unter Verwendung der fließ- und benetzungsfähigen Glasurmikrogranalien.

EP 0 492 280 A1

Die Erfindung betrifft Glasurmikrogranalien sowie ein Verfahren zur Herstellung fließ- und benetzungsfähiger Glasurmikrogranalien für trockenglasierte keramische Werkstoffe, deren Verwendung sowie ein Verfahren zur Herstellung keramischer Erzeugnisse mit glatten, strukturfreien Glasuroberflächen unter Verwendung der fließ- und benetzungsfähigen Glasurmikrogranalien.

Aus der Literatur bekannt und allgemein üblich ist der Naßauftrag von Glasuren auf keramische Substrate. Die Verwendung wäßriger Glasursuspensionen ist jedoch aus verschiedenen Gründen problematisch:

1. Wasserlösliche Ionen, z.B. Borationen, werden aus den Glasurfritten herausgelöst und führen zu Belastungen der Abwässer. Die Abscheidung der Borationen durch Ionenaustausch ist sehr kostspielig.

2. Die bei der Abwasseraufbereitung anfallenden Glasurschlämme können wegen der Schwankung in ihrer Zusammensetzung und wegen der in ihnen enthaltenen Glasurhilfsmittel nur begrenzt wiederverwendet werden.

3. Die Einbrandtechnologie setzt sich bei keramischen Fliesen vom Typ Steingut und Halbsteinzeug (Semi-gres) immer mehr durch. Die Naßapplikation der Glasur auf nicht vorgebrannten Fliesen führt zu einseitiger Scherbenquellung und Verzug der Formlinge. Dieses Problem wird bei dünnschichtigen Fliesen immer schwieriger zu beherrschen sein.

4. Der Glasurverlust beim Naßauftrag stellt einen beachtlichen Kostenfaktor bei der Fliesenherstellung dar.

Beim herkömmlichen Naßauftrag werden die Glasurbestandteile zu einer wäßrigen Suspension vermahlen und durch ein geeignetes Auftragsverfahren, z.B. über eine Glocke, eine Glasurscheibenschleuder oder einen Spritzautomaten gleichmäßig auf der Substratoberfläche verteilt. Das im Glasurschlicker enthaltene Wasser wird durch das noch poröse Substrat abgesaugt. Dadurch kommt es zu einer glatten Oberfläche der Glasurschicht. Gleichzeitig werden Glasurbestandteile durch kapillare Saugkraft oberflächlich in die Poren des Subtrats eingebracht. Diese stellen Verankerungspunkte für die beim anschließenden Brand schmelzende Glasur auf dem Substrat dar. Sie verhindern, daß die Glasur trotz ihrer hohen Oberflächen - und Grenzflächenbespannung inselförmig zusammenläuft. So kommt es zur Ausbildung der gewünschten ebenen Glasuroberfläche.

Um die geschilderten Nachteile des Glasurnaßauftrags zu umgehen, wurden verschiedene Verfahren entwickelt.

Pressglasuren entstehen dadurch, daß man ein Glasurpulver zu Granalien von ca. 0,5 - 2 mm granuliert und nach Füllung der Pressform mit Massegranulat über einen zusätzlichen Füllschieber als zweite Schicht in die Pressform eingibt. Masse - und Glasurgranulat werden gemeinsam verpresst und anschließend gebrannt.

Häufig als "Granitiglasuren" bezeichnete Glasuren entstehen dadurch, daß man grobe Fritteschmelzgranulate oder Glasurgranulate auf vorher naß engobierte oder naß vorglasierte Fliesen aufstreut und häufig noch mit einer zweiten Naßglasur überzieht und brennt.

Den Pressglasuren und "Granitiglasuren" ist gemeinsam, daß man damit nur ganz bestimmte, durch die relativ grobe Korngröße der Granulate und im Falle der Pressglasuren durch die dabei häufig zu beobachtende gegenseitige Durchdringung von Masse- und Glasurgranulaten vorgegebene Grobstruktureffekte erzielt. "Granitiglasuren" sind in der Oberfläche immer mehr oder weniger uneben (reliefartig). Die Dicke der Glasurschichten überschreitet bei beiden Verfahren in der Regel deutlich die beim Naßauftrag üblichen Glasurschichtstärken.

Ebene Glasuroberflächen mit Schichtstärken von 200 bis 300 $\mu$m, die nicht in sich strukturiert oder allenfalls feinstrukturiert sind und die den Normalfall vor allem im Bereich der Wandfliesenprodukte darstellen, sind auf diese Weise nicht zu erzielen.

Aufgabe war es daher, Glasuren bzw. Glasurgranalien zur Verfügung zu stellen, die sich beim trockenen Glasurauftrag nicht entmischen, und bereits bei einer Schichtstärke von 200 - 300 $\mu$m eine glatte (glänzende oder matte) und nicht strukturierte Glasuroberfläche beim Brand ergeben.

Eine weitere Aufgabe war es, ein Verfahren zur Herstellung derartiger Glasurgranalien zur Verfügung zu stellen sowie ein Verfahren zur Herstellung trockenglasierter keramischer Werkstoffe, vorzugsweise Fliesen, unter Verwendung der Glasurgranalien.

Diese Aufgaben konnten mit den erfindunsgemäßen Glasurgranalien, dem erfindungsgemäßen Verfahren zur Herstellung der Glasurgranalien sowie dem erfindungsgemäßen Verfahren zur Herstellung trockenglasierter keramischer Werkstoffe mit glatten Glasuroberflächen unter Verwendung der Glasurgranalien gelöst werden.

Gegenstand der Erfindung sind möglichst kugelförmige, fließ- und benetzungsfähige Glasurmikrogranalien mit einem Granulatdurchmesser von 30 bis 100 $\mu$m, wobei gegebenenfalls Teilchen unter 30 $\mu$m sowie Teilchen über 100 $\mu$m Teilchendurchmesser abgetrennt sind, die ein organisches und/oder anorganisches Bindemittel, wie z.B. Kaliumwasserglas, Kieselsol, $Al_2O_3$-Sol, Cellulose, Carboxymethylcellulose und/oder Stärke in einer Menge bis zu 10 Gew.-% enthalten.

Ein weiterer Gegenstand der Erfindung ist ein Verfahren zur Herstellung fließ- und benetzungsfähiger Glasurmikrogranalien für trockenglasierte keramische Werkstoffe, insbesondere Fliesen, welches dadurch gekennzeichnet ist, daß die Glasur trocken oder naß auf Korngrößen mit einem Korndurchmesser von 0,1 - 50 $\mu$m gemahlen wird, mit einem oder mehreren organischen und/oder anorganischen Bindemitteln, wie z.B. Kaliumwasserglas, Kieselsol, $Al_2O_3$-Sol, Cellulose, Carboxymethylcellulose und/oder Stärke in einer Menge bis zu 10 Gew.-%, gegebenenfalls unter Zusatz von Wasser versetzt wird, die so erhaltene Glasursuspension gegebenenfalls nach vorheriger Erwärmung auf 90°C anschließend in einem Sprühturm zu möglichst kugelförmigen, fließfähigen Glasurgranalien mit einem Granulatdurchmesser von 30 - 100 $\mu$m versprüht wird und gegebenenfalls die feinen Teilchen unter 30 $\mu$m sowie die groben Teilchen über 100 $\mu$m Teilchendurchmesser abgetrennt werden.

Ein weiterer Gegenstand der Erfindung ist ein Verfahren zur Herstellung fließ- und benetzungsfähiger Glasurmikrogranalien für trockenglasierte keramische Werkstoffe, welches dadurch gekennzeichnet ist, daß die Glasur trocken auf Korngrößen mit einem Korndurchmesser von 0,1 - 50 $\mu$m gemahlen wird, mit einem oder mehreren organischen und/oder anorganischen Bindemitteln, wie z.B. Kaliumwasserglas, Kieselsol, $Al_2O_3$-Sol, Cellulose, Carboxymethylcellulose und/oder Stärke in einer Menge bis zu 10 Gew.-%, unter Zusatz von 15 - 25 Gew.-% Wasser versetzt wird, in einem Mischgranulator gegebenenfalls unter Erwärmung auf 90°C zu möglichst kugelförmigen Glasurgranalien mit einem Granulatdurchmesser von 30 - 100 $\mu$m granuliert und getrocknet wird und gegebenenfalls die feinen Teilchen unter 30 $\mu$m sowie die groben Teilchen über 100 $\mu$m Teilchendurchmesser abgetrennt werden.

Ein weiterer Gegenstand der Erfindung ist die Verwendung der erfindungsgemäßen fließ- und benetzungsfähigen Glasurmikrogranalien zur Herstellung von trockenglasierten keramischen Werkstoffen, vorzugsweise Fliesen, mit möglichst glatten Oberflächen.

Ein weiterer Gegenstand der Erfindung ist ein Verfahren zur Herstellung trockenglasierter keramischer Werkstoffe, insbesondere Fliesen, mit den erfindungsgemäßen fließ- und benetzungsfähigen Glasurmikrogranalien, welches dadurch gekennzeichnet ist, daß zunächst eine als Haftschicht wirkende wäßrige Leimlösung auf Basis eines organischen und/oder anorganischen Bindemittels, wie z.B. Carboxymethylcellulose oder Kieselsol, auf den Formling aufgebracht wird, danach die erfindungsgemäßen Glasurmikrogranalien trocken und gleichmäßig aufgetragen werden und die so beschichteten Formlinge getrocknet und gebrannt werden.

Bevorzugt wird das Verfahren so durchgeführt, daß die erfindungsgemäßen Glasurmikrogranalien trocken mit einer Sprühpistole mit oder ohne Anlegen eines elektrostatischen Feldes gleichmäßig aufgetragen werden.

Wichtig für die Erzielung einer ebenen, glatten Glasuroberfläche und einer vollständigen Benetzung des Substrates beim Schmelzen der Glasur ist, daß die Glasurmikrogranalien einen mittleren Durchmesser von <100 $\mu$m aufweisen. Eine gleichzeitig enge Partikelgrößenverteilung und eine annähernd kugelförmige Partikelform ist von Vorteil.

Die erfindungsgemäß verwendeten Bindemittel haben gegenüber anderen Bindemitteln den Vorteil, daß sie keine glasurfremden Bestandteile wie z.B. Kohlenstoffreste hinterlassen, keine Blasen erzeugen und die Glasurmikrogranalien ausreichend abriebfest machen.

Das bei der Herstellung der trockenglasierten keramischen Werkstoffe eingesetzte Haftmittel kann z.B. eine Leimlösung aus einer wäßrigen Lösung von Carboxymethylcellulose, aus einer Kieselsol- oder Kieselsol-Wasserglas-Lösung sein. Falls der Werkstoff vor dem Glasurauftrag engobiert werden muß, kann auch der Engobeschlicker durch Zusatz von z.B. Carboxymethylcellulose so eingestellt werden, daß er gleichzeitig als Haftmittel für die Glasurmikrogranalien dient.

Die Glasurmikrogranalien werden beim erfindungsgemäßen Verfahren so aufgetragen, daß eine homogene Verteilung der Granalien auf der zu beschichtenden Oberfläche gewährleistet ist. Erfindungsgemäß besonders bewährt hat sich der Auftrag mit Pistolen, wie sie zur Pulverbeschichtung im elektrostatischen Feld z.B. in der Lackindustrie verwendet werden. Das vorbeifallende Material wird in den Prozess zurückgeführt. Die beschichteten Fliesen können anschließend gebrannt werden.

Es hat sich gezeigt, daß der Auftrag der Glasurmikrogranalien ohne Anlegen eines elektrostatischen Hochspannungsfeldes zwischen Pistole und zu beschichtendem, keramischem Werkstück bereits sehr glatte, strukturfreie Glasuroberflächen nach dem Einbrennen liefert. Die beim Anlegen einer Hochspannung zwischen 10 und 30 KV erzielten Oberflächen sind jedoch noch glatter und die Glasurschicht enthält weniger Blasen.

Die Erfindung soll anhand der folgenden Beispiele näher erläutert werden.

3

Beispiel 1

Eine Glasur folgender Zusammmensetzung

| | |
|---|---|
| Fritte A | 18 Gew.-% |
| Fritte B | 18 Gew.-% |
| K-Feldspat | 8 Gew.-% |
| $Al_2O_3$ calc. | 10 Gew.-% |
| Zircosil 10® | 20 Gew.-% |
| $BaCO_3$ | 7 Gew.-% |
| Flußspat | 5 Gew.-% |
| Quarz NW6® | 3 Gew.-% |
| Ton 162® | 5 Gew.-% |
| Kaolin | 6 Gew.-% |

Zircosil 10® - Cookson Minerali S.P.A., Carasco (GE) Quarz NW 6® - Sibelco Italiana S.P.A., Milano Ton 162® - Petra Industrial Minerals S.R.L., Firenze Fritte A - 1217002 } Fritte B - 1317096 } Bayer Iralia S.P.A., Milano

worin die Fritten A und B Transparentfritten mit 7 bzw. 5 Gew.-% PbO darstellen, wurde naß gemahlen, anschließend getrocknet und desaggregiert. Die Glasur wurde dann unter Zusatz von 6 Gew.-% Weizenstärke und 160 Gew.-% Wasser (beides bezogen auf 100 Gew.-% Glasur-Trockeneinwaage) aufgerührt, die Suspension zur Gelierung der Stärke kurzzeitig auf 90°C erhitzt und anschließend in einem Sprühturm mit Sprühteller zu Mikrogranalien eines mittleren Granulatdurchmessers von ca. 60 $\mu$m versprüht.

Auf Formlinge des Formates 20 x 20 cm einer zur Herstellung von Steinzeugfliesen dienenden industriellen Steinzeugmasse wurden zunächst 5 g/dm$^2$ (naß) einer Engobe folgender Zusammensetzung

| | |
|---|---|
| Zirkonfritte | 40 Gew.-% |
| Zircosil 5® | 15 Gew.-% |
| Ton 163® | 10 Gew.-% |
| K-Feldspat | 20 Gew.-% |
| $Al_2O_3$ calc. | 5 Gew.-% |
| Kaolin | 10 Gew.-% |

Zirkonfritte - 1107050, Bayer Italia S.P.A., Milano Zircosil 5® - Cookson Minerali S.P.A., Carasco (GE) Ton 163® - Petra Industrial Minerals S.R.L., Firenze

naß aufgetragen. Anschließend wurden 4 g/dm$^2$ einer 1,5 %igen Carboxymethylcellulose-Lösung aufgetragen. In die noch nasse Schicht wurden sodann mit einer Pulverauftragspistole 6 g/dm$^2$ der aus der oben beschriebenen Glasur bestehenden Granalien aufgetragen. Die Fliesen wurden bei 1160°C in einem Rollenofen mit einer Gesamtbrennzeit von 45 Minuten gebrannt. Die so glasierte Oberfläche entspricht in ihrem Aussehen und ihren Gebrauchseigenschaften einer mit einer entsprechenden naß aufgetragenen Glasur erzielten Glasuroberfläche.

Beispiel 2

Eine Glasur der gleichen Zusammensetzung wie in Beispiel 1 wurde trocken gemahlen, wobei der Glasur 15 Minuten vor Beendigung der Mahlung 5 Gew.-% Weizenstärke zugesetzt wurde. Die Granulation erfolgte unter Zusatz von 21 Gew.-% Wasser und Erhitzung auf 90°C in einem Mischgranulator. Anschließend wurde das Glasurgranulat in einer Trockentrommel bei 120°C getrocknet und desaggregiert. Dabei wurde staubförmiges Material unter ca. 30 um abgeschieden. Die Abtrennung noch vorhandener geringer Grobgranulatmengen >100 $\mu$m erfolgte über Siebklassierung.

Mit der Mikrogranulatfraktion 30 - 100 $\mu$m wurde im weiteren wie in Beispiel 1 verfahren. Die Qualität

4

der erhaltenen Glasuroberfläche entsprach der in Beispiel 1 erhaltenen.

Beispiel 3

Mikroglasurgranulate, die nach den in den Beispielen 1 und 2 beschriebenen Verfahren hergestellt worden waren, wurden mit einer Pulverauftragspistole in einer Schichtstärke entsprechend 6 g/dm$^2$ aufgetragen, wobei zwischen Pistole und zu beschichtender Fliese ein elektrostatisches Hochspannungsfeld von 15 KV anlag. Die nach dem Brand erhaltene Glasuroberfläche war noch etwas glatter und vor allem blasenärmer als die durch Trockenauftrag ohne elektrostatisches Feld gewonnenen Glasuroberflächen.

**Patentansprüche**

1. Möglichst kugelförmige, fließ- und benetzungsfähige Glasurmikrogranalien, dadurch gekennzeichnet, daß die Granalien einen Granulatdurchmesser von 30 - 100 $\mu$m aufweisen, wobei gegebenenfalls Teilchen unter 30 $\mu$m sowie Teilchen über 100 $\mu$m Teilchendurchmesser abgetrennt sind, und ein organisches und/oder anorganisches Bindemittel wie z.B. Kaliumwasserglas, Kieselsol, Al$_2$O$_3$-Sol, Cellulose, Carboxymethylcellulose und/oder Stärke in einer Menge bis zu 10 Gew.% enthalten.

2. Verfahren zur Herstellung fließ- und benetzungsfähiger Glasurmikrogranalien für trockenglasierte keramische Werkstoffe, dadurch gekennzeichnet, daß die Glasur trocken oder naß auf Korngrößen mit einem Korndurchmesser von 0,1 - 50 $\mu$m gemahlen wird, mit einem oder mehreren organischen und/oder anorganischen Bindemitteln, wie z.B. Kaliumwasserglas, Kieselsol, Al$_2$O$_3$-Sol, Cellulose, Carboxymethylcellulose und/oder Stärke in einer Menge bis zu 10 Gew.-%, gegebenenfalls unter Zusatz von Wasser versetzt wird, die so erhaltene Glasursuspension gegebenenfalls nach vorheriger Erwärmung auf 90°C anschließend in einem Sprühturm zu möglichst kugelförmigen Glasurgranalien mit einem Granulatdurchmesser von 30 - 100 $\mu$m versprüht wird und gegebenenfalls die feinen Teilchen unter 30 $\mu$m sowie die groben Teilchen über 100 $\mu$m Teilchendurchmesser abgetrennt werden.

3. Verfahren zur Herstellung fließ- und benetzungsfähiger Glasurmikrogranalien für trockenglasierte keramische Werkstoffe, dadurch gekennzeichnet, daß die Glasur trocken auf Korngrößen mit einem Korndurchmesser von 0,1 bis 50 $\mu$m gemahlen wird, mit einem oder mehreren organischen und/oder anorganischen Bindemitteln, wie z.B. Kaliumwasserglas, Kieselsol, Al$_2$O$_3$-Sol, Cellulose, Carboxymethylcellulose und/oder Stärke in einer Menge bis zu 10 Gew.-%, unter Zusatz von 15 - 25 Gew.-% Wasser versetzt wird, anschließend in einem Mischgranulator gegebenenfalls unter Erwärmung auf 90°C zu möglichst kugelförmigen Glasurgranalien mit einem Granulatdurchmesser von 30 - 100 $\mu$m granuliert und getrocknet wird und gegebenenfalls die feinen Teilchen unter 30 $\mu$m sowie die groben Teilchen über 100 $\mu$m Teilchendurchmesser abgetrennt werden.

4. Verwendung der fließ- und benetzungsfähigen Glasurmikrogranalien gemäß Anspruch 1 zur Herstellung von trockenglasierten keramischen Werkstoffen, insbesondere Fliesen, mit möglichst glatten Oberflächen.

5. Verfahren zur Herstellung trockenglasierter keramischer Werkstoffe, insbesondere Fliesen mit fließ- und benetzungsfähigen Glasurmikrogranalien gemäß Anspruch 1, dadurch gekennzeichnet, daß zunächst eine als Haftschicht wirkende wäßrige Leimlösung auf Basis eines organischen und/oder anorganischen Bindemittels wie z.B. Carboxymethylcellulose oder Kieselsol auf den Formling aufgebracht wird, danach die Glasurmikrogranalien gemäß Anspruch 1 trocken und gleichmäßig aufgetragen werden und die so beschichten Formlinge getrocknet und gebrannt werden.

6. Verfahren nach Anspruch 5 zur Herstellung trockenglasierter keramischer Werkstoffe, insbesondere Fliesen, mit fließ- und benetzungsfähigen Glasurmikrogranalien gemäß Anspruch 1, dadurch gekennzeichnet, daß die Glasurmikrogranalien gemäß Anspruch 1 trocken mit einer Sprühpistole mit oder ohne Anlegen eines elektrostatischen Feldes gleichmäßig aufgetragen werden.

7. Trockenglasierte, keramische Werkstoffe, insbesondere Fliesen mit ebenen, strukturfreien Glasuroberflächen, hergestellt nach einem Verfahren gemäß der Ansprüche 5 und 6.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 232 635 (DEGUSSA AG.) <br> * Seite 5 - Seite 7; Ansprüche * <br> --- | 1-7 | C03C8/16 <br> C04B41/86 |
| A | EP-A-0 340 531 (BAYER ITALIA S.P.A.) <br> * das ganze Dokument * <br> --- | 1-7 | |
| A | GB-A-1 569 709 (METAL BOX LTD.) <br> * das ganze Dokument * <br> --- | 1,4-7 | |
| A | CHEMICAL ABSTRACTS, vol. 96, no. 6, <br> Februar 1982, Columbus, Ohio, US; <br> abstract no. 39719Y, <br> Seite 294 ; <br> * Zusammenfassung * <br> & JP-A-56 092 182 (NIPPON STEEL CORPORATION) 25. <br> Juli 1981 <br><br> ----- | 1,4-7 | |
| | | | **RECHERCHIERTE SACHGEBIETE (Int. Cl.5)** <br><br> C03C <br> C04B <br> C23D |

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1992 | VAN BOMMEL L. |